# EUROPEAN PATENT APPLICATION

(11) **EP 4 776 686 A1**
(43) Date of publication of application: **15.07.2026**
(21) Application number: 24870103.9
(22) Date of filing: 05.08.2024
(51) Int. Cl.: H04W 36/00

(54) **COMMUNICATION METHOD AND APPARATUS**

(30) Priority: 28.09.2023 CN 202311287397
(71) Applicant: HUAWEI TECHNOLOGIES CO., LTD., Shenzhen 518129 (CN)
(72) Inventor: LU, Rui, Shenzhen, Guangdong 518129 (CN); HU, Xingxing, Shenzhen, Guangdong 518129 (CN)
(74) Representative: MERH-IP Matias Erny Reichl Hoffmann Patentanwälte PartG mbB
(86) International application number: PCT/CN2024/109863
(87) International publication number: WO 2025/066554

(57) **Abstract**

Embodiments of this application provide a communication method and apparatus. The method is performed by a terminal device or a chip used in a terminal device. The method includes: receiving first system information from a network device, where the first system information includes a first condition, the first condition is used by the terminal device to determine whether to receive and/or read second system information, and the second system information includes ephemeris information configured by the network device; determining whether the first condition is met; and receiving and/or reading the second system information when the first condition is met. In embodiments of this application, the terminal device may receive and/or read the second system information only when the first condition is met, that is, receive and/or read the ephemeris information only when the first condition is met, thereby reducing ineffective reading of the ephemeris information, and reducing measurement power consumption of the terminal device.

## Description

### CROSS-REFERENCE TO RELATED APPLICATIONS

This application claims priority to Chinese Patent Application No. 202311287397.2, filed with the China National Intellectual Property Administration on September 28, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a scenario in which a terminal device performs reselection from a terrestrial network (terrestrial network, TN) cell to a non-terrestrial network (non-terrestrial network, NTN) cell, the terminal device needs to perform neighboring cell measurement (namely, NTN neighboring cell measurement) on the NTN cell. To increase cell reselection efficiency of the terminal device, a TN broadcasts ephemeris information, to assist the terminal device in performing neighboring cell measurement on the NTN cell.

Currently, after the TN broadcasts the ephemeris information, the terminal device keeps maintaining the ephemeris information, that is, the terminal device continuously receives and reads system information to update the ephemeris information. Consequently, measurement power consumption of the terminal device is high.

### SUMMARY

Embodiments of this application provide a communication method and apparatus, to reduce measurement power consumption of a terminal device.

According to a first aspect, an embodiment of this application provides a communication method. The method may be performed by a terminal device or a chip system. The chip system can implement a function of the terminal device. The method includes: receiving first system information from a network device, where the first system information includes a first condition, the first condition is used by the terminal device to determine whether to receive and/or read second system information, and the second system information includes ephemeris information configured by the network device; determining whether the first condition is met; and receiving and/or reading the second system information when the first condition is met.

In this embodiment of this application, the terminal device may receive and/or read the second system information only when the first condition is met, that is, the terminal device receives and/or reads the ephemeris information only when the first condition is met, thereby reducing ineffective reading of the ephemeris information, and reducing measurement power consumption of the terminal device.

In an optional implementation, the first condition includes one or more of the following: signal quality of a serving cell of the terminal device is less than or equal to a first threshold; a condition for TN neighboring cell measurement is met; TN neighboring cell measurement is being performed; signal quality of a TN neighboring cell of a serving cell of the terminal device is less than or equal to a second threshold; or a priority of an NTN neighboring cell of a serving cell of the terminal device is higher than a priority of the serving cell. In the implementation, the terminal device reads the ephemeris information to perform NTN neighboring cell measurement, and if the terminal device does not need to perform NTN neighboring cell measurement, the terminal device does not need to read the ephemeris information either. Therefore, reading the ephemeris information by the terminal device may be limited by using the first condition, thereby reducing ineffective reading of the ephemeris information, and reducing measurement power consumption of the terminal device.

In an optional implementation, if the signal quality of the TN neighboring cell of the serving cell of the terminal device is less than or equal to the second threshold, a priority of the TN neighboring cell is higher than the priority of the NTN neighboring cell of the serving cell. In the implementation, the priority of the NTN neighboring cell is lower than the priority of the TN neighboring cell, and when there is TN coverage around the terminal device, the terminal device does not need to perform NTN neighboring cell measurement. Therefore, the terminal device may read the second system information only when neighboring cell measurement is already performed on all TN neighboring cells whose priorities are higher than that of the NTN neighboring cell and signal quality obtained through measurement is less than or equal to the second threshold, thereby reducing ineffective reading of the ephemeris information, and reducing measurement power consumption of the terminal device.

In an optional implementation, the first system information further includes a second condition; and the method further includes: perform NTN neighboring cell measurement when the second condition is met, where the second condition includes: the signal quality of the TN neighboring cell of the serving cell of the terminal device is less than or equal to the second threshold. In the implementation, the priority of the NTN neighboring cell is lower than the priority of the TN neighboring cell, and when there is TN coverage around the terminal device, the terminal device does not need to perform NTN neighboring cell measurement. Therefore, the terminal device may perform NTN neighboring cell measurement only when the signal quality of the TN neighboring cell is less than or equal to the second threshold, thereby enhancing a condition for NTN neighboring cell measurement, reducing ineffective measurement of the NTN neighboring cell, and reducing measurement power consumption of the terminal device.

In an optional implementation, the priority of the TN neighboring cell is higher than the priority of the NTN neighboring cell of the serving cell. In the implementation, the priority of the NTN neighboring cell is lower than the priority of the TN neighboring cell, and when there is TN coverage around the terminal device, the terminal device does not need to perform NTN neighboring cell measurement. Therefore, the terminal device may perform NTN neighboring cell measurement only when neighboring cell measurement is already performed on all TN neighboring cells whose priorities are higher than that of the NTN neighboring cell and signal quality obtained through measurement is less than or equal to the second threshold, thereby enhancing a condition for NTN neighboring cell measurement, reducing ineffective measurement of the NTN neighboring cell, and reducing measurement power consumption of the terminal device.

In an optional implementation, the method further includes: when the first condition is not met and the second condition is met, receiving and/or reading the second system information before the NTN neighboring cell measurement is performed. In the implementation, the terminal device reads the ephemeris information to perform NTN neighboring cell measurement, and if the terminal device does not need to perform NTN neighboring cell measurement, the terminal device does not need to read the ephemeris information. Therefore, the terminal device may read the second system information before performing NTN neighboring cell measurement, that is, read the ephemeris information before performing NTN neighboring cell measurement, thereby reducing ineffective reading of the ephemeris information, and reducing measurement power consumption of the terminal device.

In an optional implementation, the method further includes: when the first condition is not met and the first system information further includes first indication information, receiving and/or reading the second system information, where the first indication information indicates that the second system information includes the ephemeris information. In the implementation, the terminal device may read the second system information when the first system information indicates that the second system information includes the ephemeris information, thereby reducing ineffective reading of the ephemeris information, and reducing measurement power consumption of the terminal device.

In an optional implementation, the first threshold is equal to a third threshold, and the third threshold is a threshold corresponding to the condition for TN neighboring cell measurement. In the implementation, the first threshold may directly reuse the threshold corresponding to the condition for TN neighboring cell measurement. Because the threshold corresponding to the condition for TN neighboring cell measurement complies with specifications of an existing protocol, compatibility is better.

In an optional implementation, the second threshold is greater than or equal to a third threshold, and the third threshold is a threshold corresponding to the condition for TN neighboring cell measurement. In the implementation, the second threshold may directly reuse the threshold corresponding to the condition for TN neighboring cell measurement. Because the threshold corresponding to the condition for TN neighboring cell measurement complies with specifications of an existing protocol, compatibility is better. Alternatively, the second threshold may be greater than the threshold corresponding to the condition for TN neighboring cell measurement, and the threshold corresponding to the condition for TN neighboring cell measurement is the same as a threshold corresponding to an unenhanced condition for NTN neighboring cell measurement, so that a condition of reading the ephemeris information by the terminal device is more easily achieved than the unenhanced condition for NTN neighboring cell measurement. In this case, the terminal device can read the ephemeris information before performing NTN neighboring cell measurement, so that NTN neighboring cell measurement can be performed by using the ephemeris information.

According to a second aspect, an embodiment of this application further provides a communication method. The method may be performed by a network device or a chip system. The chip system can implement a function of the network device. The method includes: broadcasting first system information and second system information, where the first system information includes a first condition, the first condition is used by a terminal device to determine whether to receive and/or read the second system information, and the second system information includes ephemeris information configured by the network device.

In an optional implementation, the first condition includes one or more of the following: signal quality of a serving cell of the terminal device is less than or equal to a first threshold; a condition for TN neighboring cell measurement is met; TN neighboring cell measurement is being performed; signal quality of a TN neighboring cell of a serving cell of the terminal device is less than or equal to a second threshold; or a priority of an NTN neighboring cell of a serving cell of the terminal device is higher than a priority of the serving cell.

In an optional implementation, if the signal quality of the TN neighboring cell of the serving cell of the terminal device is less than or equal to the second threshold, a priority of the TN neighboring cell is higher than the priority of the NTN neighboring cell of the serving cell.

In an optional implementation, the first system information further includes a second condition, the second condition is used by the terminal device to perform NTN neighboring cell measurement, and the second condition includes: the signal quality of the TN neighboring cell of the serving cell of the terminal device is less than or equal to the second threshold.

In an optional implementation, a priority of the TN neighboring cell is higher than the priority of the NTN neighboring cell of the serving cell.

In an optional implementation, the first threshold is equal to a third threshold, and the third threshold is a threshold corresponding to the condition for TN neighboring cell measurement.

In an optional implementation, the second threshold is greater than or equal to a third threshold, and the third threshold is a threshold corresponding to the condition for TN neighboring cell measurement.

For technical effects brought by the second aspect or some optional implementations, refer to the descriptions of the technical effects brought by the first aspect or the corresponding implementations.

According to a third aspect, an embodiment of this application provides a communication apparatus, including a processor and a memory. The memory is configured to store computer instructions. When the apparatus runs, the processor executes the computer instructions stored in the memory, to enable the apparatus to perform any one of the implementation methods according to the first aspect and the second aspect. The memory may be a volatile or non-volatile memory, for example, a cache in a semiconductor chip.

According to a fourth aspect, an embodiment of this application provides a communication apparatus. The apparatus may be a terminal device or a network device, or may be a chip used in a terminal device or a network device. The apparatus has a function of implementing any one of the implementation methods according to the first aspect and the second aspect. The function may be implemented by hardware, or may be implemented by hardware executing corresponding software. The hardware or the software includes one or more modules corresponding to the function.

According to a fifth aspect, an embodiment of this application provides a communication apparatus, including a unit or means (means) configured to perform steps of any one of the implementation methods according to the first aspect and the second aspect.

According to a sixth aspect, an embodiment of this application provides a communication apparatus, including a processor and an interface circuit. The processor is configured to communicate with another apparatus through the interface circuit, and perform any one of the implementation methods according to the first aspect and the second aspect. There may be one or more processors.

According to a seventh aspect, an embodiment of this application provides a communication apparatus, including a processor coupled to a memory. The processor is configured to invoke a program stored in the memory, to perform any one of the implementation methods according to the first aspect and the second aspect. The memory may be located inside or outside the apparatus. There may also be one or more processors.

According to an eighth aspect, an embodiment of this application further provides a computer-readable storage medium. The computer-readable storage medium stores instructions, and when the instructions are run on a communication apparatus, any one of the implementation methods according to the first aspect and the second aspect is performed.

According to a ninth aspect, an embodiment of this application further provides a computer program product. The computer program product includes a computer program or instructions. When the computer program or the instructions are run by a communication apparatus, any one of the implementation methods according to the first aspect and the second aspect is performed.

According to a tenth aspect, an embodiment of this application further provides a chip system, including a processor, configured to perform any one of the implementation methods according to the first aspect and the second aspect.

### BRIEF DESCRIPTION OF DRAWINGS

FIG. 1 is a diagram of an NTN system according to an embodiment of this application;
FIG. 2 is a diagram of another NTN system according to an embodiment of this application;
FIG. 3 is a diagram of a structure of an access network device according to an embodiment of this application;
FIG. 4 is a schematic flowchart of a communication method according to an embodiment of this application;
FIG. 5 is a diagram of a structure of a communication apparatus according to an embodiment of this application; and
FIG. 6 is a diagram of a structure of a communication apparatus according to an embodiment of this application.

### DESCRIPTION OF EMBODIMENTS

The following describes in detail embodiments of this application with reference to the accompanying drawings of the specification.

A communication method provided in embodiments of this application may be applied to an NTN system. The NTN system may perform networking by using a non-terrestrial network device, such as an unmanned aerial vehicle, a high altitude platform station (high altitude platform station, HAPS), or a satellite, to provide services such as data transmission and voice communication for a terminal device. In addition, the NTN system may further include another non-terrestrial network device. This is not limited in this application.

The NTN system may further support various mobile communication systems, for example, another communication system such as a new radio (new radio, NR) system, a long term evolution (long term evolution, LTE) system, or a future communication system. This is not specifically limited herein.

A satellite is used as an example of the non-terrestrial network device in the NTN system. Satellites may be classified into geostationary earth orbit (geostationary earth orbit, GEO) satellites, medium earth orbit (medium earth orbit, MEO) satellites, and low earth orbit (low earth orbit, LEO) satellites based on a satellite altitude, that is, a satellite orbit altitude. A GEO is a synchronous earth satellite orbit. Satellites running on the orbit are stationary relative to the ground. An orbital altitude of the GEO is generally 35786 kilometers (km). An LEO and an MEO are collectively referred to as non-geostationary orbits (non-geostationary orbit, NGSO). Satellites running on this type of orbits move at a high speed relative to the ground. An orbital altitude of the LEO generally ranges from 160 km to 2000 km, and an orbital altitude of the MEO generally ranges from 2000 km to 35786 km. For the NGSO, based on whether beams of a satellite move with the satellite, cells may be further classified into earth moving cells (earth moving cells) and earth fixed cells (earth fixed cells or quasi-earth fixed cells). For the earth moving cell, the cell moves relative to the ground, and beam pointing of the satellite moves with the satellite. For the earth fixed cell or the quasi-earth fixed cell, the cell is fixed relative to the ground within a specific time, and an antenna of the satellite may fix the beam pointing in a specific area of the ground within the specific time by using a beamforming capability of the antenna.

In the NTN system, working modes of an NTN device may include a transparent (transparent) mode and a regenerative (regenerative) mode. Based on the working modes of the NTN device, architectures of the NTN system may be classified into the following two types. One is a transparent (transparent) forwarding architecture. In the architecture, the NTN device may be a relay (relay) or an amplifier, and may perform radio frequency filtering, amplification, and the like, to regenerate a physical layer signal. The NTN device may be responsible for layer 1 (layer 1, L1) relay, is configured to perform physical layer forwarding, and is invisible to an upper layer. The other is a regenerative (regenerative) architecture. In the architecture, the NTN device has a processing function of an access network device. For example, in the regenerative working mode, the satellite may be further classified into a regenerative satellite that does not have an inter-satellite link (inter-satellite link, ISL), that is, there is no inter-satellite link between satellites; or a regenerative satellite that has an inter-satellite link, that is, there is an interface between satellites for a direct data interaction, where the inter-satellite link uses an Xn interface; or a regenerative satellite that has a processing function of a distributed unit (distributed unit, DU) of the access network device, where in this scenario, the satellite functions as the DU.

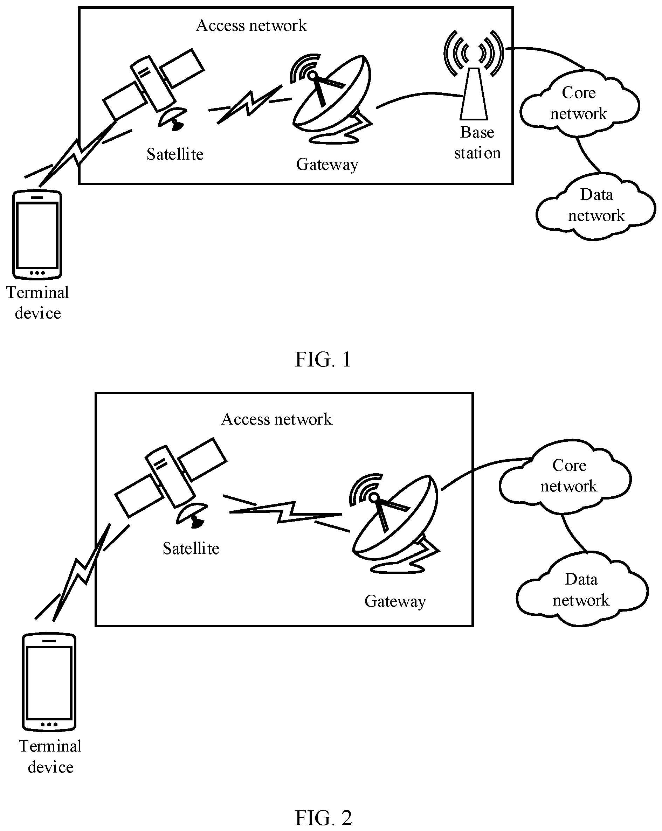

For example, FIG. 1 is a diagram of an NTN system to which embodiments of this application are applicable. The NTN system may be of a transparent forwarding architecture. In the system shown in FIG. 1, a terminal device may communicate with a 5G core network (core network, CN) through an access network, so that the terminal device can be connected to a data network (data network, DN) through the 5G CN. A satellite and an NTN gateway (gateway) may function as a relay device between the terminal device and a base station or as a radio remote unit (remote radio unit, RRU) of a base station.

For example, FIG. 2 is a diagram of another NTN system to which embodiments of this application are applicable. The NTN system may be of a regenerative architecture. In the system shown in FIG. 2, a satellite may function as a base station, form an access network with an NTN gateway, and communicate with a 5G CN through the NTN gateway, so that the satellite can be connected to a DN through the 5G CN. In addition, the satellite may further provide a wireless access service for a terminal device. FIG. 2 shows an example of a regenerative satellite architecture having no inter-satellite link.

It should be noted that FIG. 1 and FIG. 2 show only one satellite and one NTN gateway. During actual use, an architecture with a plurality of satellites and/or a plurality of NTN gateways may be used as required. Each satellite may provide a service for one or more terminal devices, each NTN gateway may correspond to one or more satellites, and each satellite may correspond to one or more NTN gateways. This is not specifically limited in embodiments of this application.

It should be noted that FIG. 1 and FIG. 2 are merely examples of the NTN system, and the NTN system may further include another specific system. This is not limited in this application.

Devices in embodiments of this application include a terminal device and a network device. For example, the network device includes a terrestrial network device (for example, an access network device) and a non-terrestrial network device (for example, a satellite). Specifically,
the terminal device is also referred to as user equipment (user equipment, UE), a mobile station (mobile station, MS), a mobile terminal (mobile terminal, MT), or the like, and is a device that provides voice and/or data connectivity for a user. For example, the terminal device may be a hand-held device, an in-vehicle device, or the like that has a wireless connection function. Currently, some examples of the terminal device may be as follows: a mobile phone (mobile phone), a tablet computer, a notebook computer, a palmtop computer, a mobile Internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), and the like.

The access network device may be a radio access network (radio access network, RAN) node (or device) that connects a terminal device to a wireless network, for example, a base station. Some examples of the RAN node may be as follows: a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB, or home NodeB, HNB), a baseband unit (baseband unit, BBU), a wireless fidelity (wireless fidelity, Wi-Fi) access point (access point, AP), and the like.

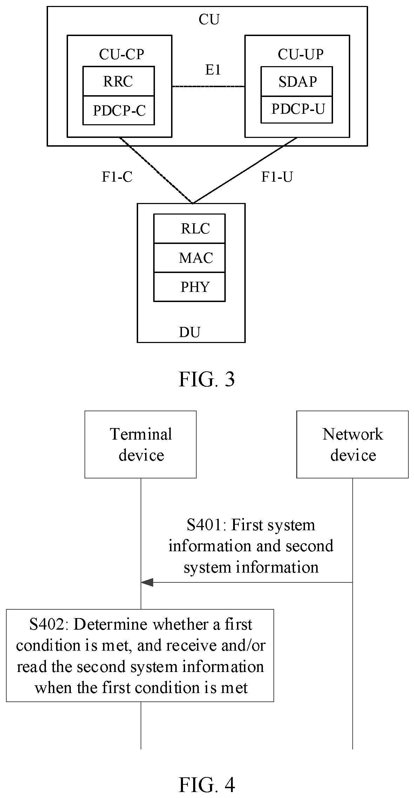

In addition, in a network structure, the access network device may include a central unit (central unit, CU) node or a distributed unit (distributed unit, DU) node, or include a CU node and a DU node. An RAN device that includes the CU node and the DU node splits protocol layers of a gNB in an NR system. Functions of a part of the protocol layers are centrally controlled by a CU, functions of a part or all of remaining protocol layers are distributed in a DU, and the CU centrally controls the DU, as shown in FIG. 3. Further, the CU may be further divided into a control plane (CU-CP) and a user plane (CU-UP). The CU-CP is responsible for a control plane function, mainly including radio resource control (radio resource control, RRC) and a packet data convergence protocol (packet data convergence protocol, PDCP) corresponding to the control plane (namely, PDCP-C). The PDCP-C is mainly responsible for data encryption and decryption, integrity protection, data transmission, and the like on the control plane. The CU-UP is responsible for a user plane function, mainly including a service data adaptation protocol (service data adaptation protocol, SDAP) and a PDCP corresponding to the user plane (namely, PDCP-U). The SDAP is mainly responsible for processing data of the core network and mapping a flow (flow) to a bearer. The PDCP-U is mainly responsible for encryption and decryption, integrity protection, header compression, sequence number maintenance, data transmission, and the like on a data plane. The CU-CP and the CU-UP are connected through an E1 interface. The CU-CP, on behalf of the gNB, is connected to the core network through an NG interface and connected to the DU through an F1 interface-control plane (namely, F1-C). The CU-UP is connected to the DU through an F1 interface-user plane (namely, F 1-U). It is clear that, in another possible implementation, the PDCP-C is alternatively in the CU-UP.

It may be understood that, in different systems, the CU (including the CU-CP or the CU-UP) or the DU may alternatively have different names, but a person skilled in the art can understand meanings of the names. For example, in an open radio access network (open radio access network, O-RAN) system, the CU may also be referred to as an O-CU (open CU), the DU may also be referred to as an O-DU, the CU-CP may also be referred to as an O-CU-CP, and the CU-UP may also be referred to as an O-CU-UP. For ease of description, the CU, the CU-CP, the CU-UP, and the DU are used as examples for description in this application.

In embodiments of this application, a communication apparatus configured to implement a function of the network device or a function of the terminal device may be the network device or the terminal device, or may be an apparatus that can support the network device or the terminal device in implementing a function, for example, a chip system, and the apparatus may be installed in the network device or the terminal device. In the technical solutions provided in embodiments of this application, an example in which the apparatus configured to implement the function of the network device is the network device and the apparatus configured to implement the function of the terminal device is the terminal device is used, to describe the technical solutions provided in embodiments of this application.

In embodiments of this application, unless otherwise specified, a quantity of nouns indicates "a singular noun or a plural noun", that is, "one or more". "At least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. For example, A/B indicates A or B. At least one of the following items (pieces) or a similar expression thereof indicates any combination of these items, including a single item (piece) or any combination of a plurality of items (pieces).

Ordinal numbers such as "first" and "second" in embodiments of this application are intended to distinguish between a plurality of objects, but are not intended to limit sizes, content, an order, a time sequence, priorities, importance degrees, or the like of the plurality of objects. For example, first system information and second system information may be same system information, or may be different system information. In addition, the names do not indicate different priorities, importance degrees, or the like of the two system information.

The foregoing briefly describes the communication systems to which embodiments of this application are applicable. The following describes related technical solutions in embodiments of this application.

### 1. System information (system information, SI)

The SI includes a master information block (master information block, MIB) and a plurality of SIBs (system information block). The system information may be further classified into minimum (minimum) SI and other (other) SI. The minimum SI includes basic information required for initial access and information for obtaining any other SI.

The minimum SI includes a MIB and a SIB1. The MIB includes cell barring status information and configuration information required for further receiving the system information, for example, a configuration of a control resource set (control resource set, CORSET) #0. The MIB is periodically broadcast through a broadcast channel (broadcast channel, BCH). The SIB 1 includes scheduling information of another SIB and basic information required for initial access. The SIB1 is also referred to as remaining minimum system information (remaining minimum system information, RMSI). The SIB1 is periodically broadcast through a downlink shared channel (downlink shared channel, DL-SCH), or is sent to a terminal device in an RRC_CONNECTED (RRC_CONNECTED) state by using dedicated signaling.

Other SI includes all SIBs that are not broadcast in the minimum SI. The SIBs may be periodically broadcast on the DL-SCH, or broadcast on demand (on demand) on the DL-SCH. That is, a terminal device in an RRC_IDLE (RRC_IDLE) state, an RRC_INACTIVE (RRC_INACTIVE) state, or an RRC_CONNECTED state sends a request to a network side, or to a terminal device in an RRC_CONNECTED state on the DL-SCH in a dedicated manner.

SIBs related to cell reselection include a SIB2, a SIB3, and a SIB4. The SIB2 includes cell reselection information that is mainly related to a serving cell. The SIB3 includes information about a serving frequency and an intra-frequency neighboring cell that are related to cell reselection (including a frequency-common cell reselection parameter and a cell-specific reselection parameter). The SIB4 includes information about another NR frequency and an inter-frequency neighboring cell that are related to cell reselection (including a frequency-common cell reselection parameter and a cell-specific reselection parameter). The SIB4 can also be used for NR measurement in an idle or inactive state.

Currently, a SIB that carries ephemeris information is a SIB19 (an NR NTN) or a SIB31 (an Internet of things (internet of things, IoT) NTN). The SIB19 includes information required for a cell in an NTN system to access a network, and mainly includes parameters such as ephemeris information of a satellite in the serving cell, ephemeris information of a satellite in a neighboring cell, a reference location of the serving cell, a distance threshold, and a remaining service time. The ephemeris information of the satellite includes an orbit parameter, or a parameter such as an orientation of the satellite obtained through calculation based on an orbit parameter. It may be understood that the ephemeris information of the satellite may be used to calculate, predict, describe, or track a flight status of the satellite, such as a time, a position, and a speed.

### 2. Cell reselection

The terminal device selects, through neighboring cell measurement, a cell with better signal quality to camp on. The terminal device starts neighboring cell measurement by considering two parameters: a cell priority and signal quality of a current serving cell. Specifically, if a priority of the neighboring cell is higher than a priority of the current serving cell, measurement is unconditionally started. If the priority of the neighboring cell is lower than or equal to the priority of the current serving cell, the terminal device measures the signal quality of the current serving cell, and compares the signal quality with a quality standard delivered by a network side. If the signal quality of the current serving cell of the terminal device is higher than a threshold, neighboring cell measurement is not started; otherwise, neighboring cell measurement is started.

The terminal device may obtain neighboring cell information and priority information from system information of the current serving cell. The neighboring cell information and the priority information are generally configured by the network side, and are delivered to the terminal device in a cell broadcast manner. A value range of a cell reselection priority (CellReselectionPriority) parameter is 0 to 7. A larger value of the parameter indicates higher reselection priorities of all cells on a corresponding carrier frequency. In addition, the NR configures a cell reselection subpriority (CellReselectionSubPriority) parameter for each carrier frequency. A value is 0.2, 0.4, 0.6, or 0.8.

For example, the priority of the neighboring cell is higher than the priority of the serving cell: Neighboring cell measurement is unconditionally started.

The priority of the neighboring cell is equal to the priority of the serving cell: If the neighboring cell and the serving cell are intra-frequency cells, a cell selection received signal strength value (Srxlev) of the serving cell is less than or equal to a threshold SIntraSearchP, and a cell selection received signal quality value (Squal) of the serving cell is less than or equal to a threshold SIntraSearchQ, the terminal device performs intra-frequency (intra-frequency) measurement on the neighboring cell. If the neighboring cell and the serving cell are inter-frequency cells, Srxlev of the serving cell is less than or equal to a threshold SnonIntraSearchP, and Squal of the serving cell is less than or equal to a threshold SnonIntraSearchQ, the terminal device performs inter-frequency (inter-frequency) measurement on the neighboring cell.

The priority of the neighboring cell is lower than the priority of the serving cell: If Srxlev of the serving cell is less than or equal to the threshold SnonIntraSearchP, and Squal of the serving cell is less than or equal to the threshold SnonIntraSearchQ, the terminal device performs inter-frequency measurement on the neighboring cell or inter-system (inter-RAT) measurement on the neighboring cell.

### 3. NTN-TN neighboring cell measurement

In a scenario in which the terminal device performs reselection from an NTN cell to a TN cell, the terminal device needs to perform neighboring cell measurement (namely, TN neighboring cell measurement) on the TN cell. For example, to increase cell reselection or measurement efficiency of the terminal device, an NTN broadcasts TN coverage information. After receiving the TN coverage information, the terminal device may determine, based on the TN coverage information, whether to perform neighboring cell measurement on the TN cell. If there is no TN coverage at a current location of the terminal device, the terminal device does not perform TN neighboring cell measurement, thereby reducing measurement power consumption of the terminal device. In a scenario in which the terminal device performs reselection from a TN cell to an NTN cell, the terminal device needs to perform neighboring cell measurement (namely, NTN neighboring cell measurement) on the NTN cell. For example, to increase cell reselection or measurement efficiency of the terminal device, a TN broadcasts ephemeris information of the NTN cell, to assist the terminal device in performing neighboring cell measurement on the NTN cell. In addition, because a priority of the NTN neighboring cell is lower than a priority of the TN neighboring cell, when there is TN coverage around the terminal device, the terminal device does not need to perform neighboring cell measurement on the NTN cell.

Currently, after the TN broadcasts the ephemeris information of the NTN cell, the terminal device keeps maintaining the ephemeris information of the NTN cell, that is, the terminal device keeps reading the system information to update the ephemeris information of the NTN cell. However, because the terminal device reads the ephemeris information of the NTN cell to perform neighboring cell measurement on the NTN cell, if the terminal device does not need to perform neighboring cell measurement on the NTN cell, the terminal device does not need to read the ephemeris information of the NTN cell either. Therefore, unconditionally reading the ephemeris information of the NTN cell by the terminal device only increases measurement power consumption of the terminal device.

### 4. In-advance neighboring cell measurement

A connected-mode neighboring cell measurement technology is introduced in a narrowband Internet of things (narrowband Internet of things, NB-IoT), so that neighboring cell measurement can be performed in advance when quality of a radio link of the current serving cell deteriorates, so that an RRC connection can be quickly reestablished when the terminal device detects a radio link failure. Specifically, the terminal device is configured based on the signal quality of the current serving cell, a distance between the terminal device and the reference location of the current serving cell, or the remaining service time of the current serving cell (or a time within which the current serving cell stops providing a service for a covered area) to perform neighboring cell measurement in advance. For example, a process of in-advance neighboring cell measurement is as follows:

When the terminal device changes from RRC_IDLE or RRC_INACTVE to RRC_CONNECTED, the terminal device may perform the following operations:
If the SIB3 carries configuration information (for example, neighCellMeasCriteria) for in-advance measurement, the terminal device sets a reference value (NRSRPRef) of narrowband reference signal received power (narrowband reference signal received power, NRSRP) to a latest serving cell measurement result. The serving cell measurement result may be used for cell selection or reselection. Herein, neighCellMeasCriteria includes two parameters: s-MeasureDeltaP and t-MeasureDeltaP, where s-MeasureDeltaP indicates a change threshold of an NRSRP of a serving cell for which neighboring cell measurement is triggered by the terminal device in an RRC_CONNECTED state, and t-MeasureDeltaP indicates duration for which the terminal device in an RRC_CONNECTED state performs neighboring cell measurement.

Alternatively, if the system information SIB3 carries neighCellMeasCriteria and does not meet a relaxed measurement condition, the terminal device starts a timer T326, and sets a length of the timer T326 to t-MeasureDeltaP. The relaxed measurement condition is a condition under which the terminal device may not perform neighboring cell measurement. For example, when the terminal device is in a cell center, the terminal device may not perform neighboring cell measurement; or when the terminal device moves at a low speed, the terminal device may not perform neighboring cell measurement or reduce neighboring cell measurement. The timer T326 is configured to control a measurement time for in-advance measurement. If the timer T326 expires, the terminal device stops the in-advance measurement.

When the terminal device is in an RRC_CONNECTED state, the terminal device may perform the following operations:
If the SIB3 carries neighCellMeasCriteria, and a difference between NRSRPRef and a first difference is greater than s-MeasureDeltaP, the terminal device may set NRSRPRef equal to the first difference, where the first difference is a difference between the NRSRP and a transmit power offset (nrs-PowerOffsetNonAnchor), or the terminal device may start or restart the timer T326, and set a length of the timer T326 to t-MeasureDeltaP.

Alternatively, if the SIB3 does not carry neighCellMeasCriteria or if the timer T326 is running, the terminal device may perform intra-frequency measurement on the neighboring cell when the first difference is less than a threshold s-MeasureIntra, and perform inter-frequency measurement on the neighboring cell when the first difference is less than a threshold s-MeasureInter.

Alternatively, if the SIB3 carries a service stop time (t-service) of the serving cell, the terminal device may perform intra-frequency measurement on the neighboring cell or inter-frequency measurement on the neighboring cell before the service stop time expires. A specific time for performing neighboring cell measurement is implemented by the terminal device. Alternatively, when the SIB3 carries a neighboring cell service start time (which is also referred to as a neighboring cell coverage start time, for example, t-ServiceStartNeigh), the terminal device may perform intra-frequency measurement on the neighboring cell or inter-frequency measurement on the neighboring cell when or after t-ServiceStartNeigh arrives. A specific time for performing neighboring cell measurement is implemented by the terminal device.

Alternatively, if the SIB3 carries the reference location (referenceLocation) and the distance threshold (distanceThresh) of the serving cell, the terminal device may perform neighboring cell measurement when a distance between the terminal device and the reference location of the serving cell is less than the distance threshold.

However, the foregoing condition for neighboring cell measurement considers only the signal quality of the current serving cell, a distance between the terminal device and the reference location of the current serving cell, or the remaining service time of the current serving cell, without considering the priority of the TN or the priority of the NTN is not considered. If there is a TN neighboring cell, the terminal device does not need to perform neighboring cell measurement on an NTN cell. Unconditionally performing neighboring cell measurement on the NTN cell only increases ineffective neighboring cell measurement performed by the terminal device, thereby increasing measurement power consumption of the terminal device.

### 5. Read ephemeris information

For the NB-IoT, the ephemeris information of the satellite of the serving cell is carried in the SIB31, for example, carried in SystemInformationBlockType31 (or for the NB-IoT, the system information is SystemInformationBlockType31-NB). The ephemeris information of the satellite of the neighboring cell is carried in a newly defined SIB. For the terminal device in an RRC_CONNECTED state, a process of reading the ephemeris information of the serving cell is as follows: When the terminal device obtains the ephemeris information of the serving cell, the terminal device starts a timer T317, for example, based on a reference start time (for example, an epoch time) of a validity period of ephemeris information of a satellite specified in SystemInformationBlockType31, and duration of the timer T317 is the validity period (for example, ul-syncValidityDuration) of the ephemeris information of the satellite specified in SystemInformationBlockType31. If the timer T317 expires, the terminal device determines that the ephemeris information of the serving cell expires. In this case, the terminal device may start a timer T318, to obtain the SIB31 and/or the new SIB that carries the ephemeris information of the neighboring cell. After obtaining the ephemeris information of the serving cell, the terminal device stops the timer T318. However, after stopping the timer T318, the terminal device no longer continues to read the ephemeris information of the neighboring cell. However, when the terminal device stops the timer T318, the ephemeris information of the neighboring cell may not be obtained. If the timer T318 expires, for an NB-IoT terminal device that has not activated access-side security and does not support transmission optimization that is performed through a control plane, the terminal device enters RRC_IDLE. Otherwise, the terminal device initiates RRC reestablishment.

To resolve the foregoing problem that measurement power consumption of the terminal device is large because the ephemeris information is unconditionally read and neighboring cell measurement is unconditionally performed on the NTN cell, embodiments of this application provide a solution in Embodiment 1. The following provides specific descriptions.

### Embodiment 1

This embodiment of this application provides a communication method, to reduce measurement power consumption of a terminal device. The method may be applied to a scenario in which the terminal device performs NTN neighboring cell measurement by performing reselection from a TN cell to an NTN cell, or the method may be applied to a scenario in which a terminal device in RRC_CONNECTED in an NB-IoT performs NTN neighboring cell measurement in advance to quickly initiate RRC connection reestablishment.

FIG. 4 is a schematic flowchart of a communication method according to an embodiment of this application. In the following descriptions, an example in which the method is performed by a network device (or a chip used in a network device) and a terminal device (or a chip used in a terminal device) is used. The method includes the following steps.

S401: The network device broadcasts first system information and second system information. Correspondingly, the terminal device receives the first system information from the network device.

The first system information may include a first condition (also referred to as an ephemeris information receiving and/or reading condition), the first condition may be used by the terminal device to receive and/or read the second system information, the second system information may include ephemeris information configured by the network device, and the ephemeris information is ephemeris information of an NTN neighboring cell of a serving cell. Optionally, the first system information may be a SIB1, a SIB2, a SIB3, a SIB4, or another piece of system information, and the second system information may be a SIB19, a SIB31, or another piece of system information. Optionally, that the network device is a network device corresponding to a TN cell may be understood as that the network device provides a TN service for the terminal device, or that a serving cell of the terminal device is a TN cell. It may be understood that the terminal device in this embodiment of this application currently camps on or accesses a cell belonging to the network device.

For example, the network device may broadcast the second system information. The second system information may include satellite-related information. The satellite-related information may include NTN configuration information (NTN-Config). The NTN configuration information includes a parameter required by the terminal device to access a satellite, for example, ephemeris information, common (common) timing advance (timing advance, TA), a scheduling offset (K_offset), a validity period of an uplink synchronization time, or a reference start time of a validity period of ephemeris information. The satellite-related information may further include one or more of the following: a service stop time of the serving cell, where the service stop time indicates a time when a cell provided by an NTN quasi-earth-fixed system stops serving an area currently covered by the cell; and a reference location of the serving cell, where the reference location indicates a reference location of a cell provided by the NTN quasi-earth-fixed system, for starting location-based measurement in RRC_IDLE and RRC_INACTIVE; a distance threshold, where the distance threshold indicates a distance threshold from the reference location of the serving cell, and is used for starting location-based measurement in RRC_IDLE and RRC_INACTIVE; and NTN neighboring cell configuration information (NTN-NeighCellConfig), where the NTN neighboring cell configuration information includes satellite configuration information of the neighboring cell, frequency information of the neighboring cell, and a cell identifier of the neighboring cell.

In a possible implementation, the first condition may include one or more of the following:
Signal quality of the serving cell is less than or equal to a first threshold. The signal quality of the serving cell may be a reference signal received power (reference signal received power, RSRP) of the serving cell, reference signal received quality (reference signal received quality, RSRQ) of the serving cell, or a value determined based on an RSRP of the serving cell and RSRQ of the serving cell, such as Srxlev of the serving cell and Squal of the serving cell.

A condition for neighboring cell measurement is met. The condition for neighboring cell measurement may include a condition for high-priority neighboring cell measurement, a condition for equal-priority neighboring cell measurement, and a condition for low-priority neighboring cell measurement. For example, the condition for neighboring cell measurement may include one or more of the following: A priority of the neighboring cell is higher than a priority of the serving cell: The terminal device unconditionally starts neighboring cell measurement. The priority of the neighboring cell is equal to the priority of the serving cell: If the neighboring cell and the serving cell are intra-frequency cells, Srxlev of the serving cell is less than or equal to a threshold SIntraSearchP, and Squal of the serving cell is less than or equal to a threshold SIntraSearchQ, the terminal device starts intra-frequency measurement on the neighboring cell; and if the neighboring cell and the serving cell are inter-frequency cells, Srxlev of the serving cell is less than or equal to a threshold SnonIntraSearchP, and Squal of the serving cell is less than or equal to a threshold SnonIntraSearchQ, the terminal device starts inter-frequency measurement on the neighboring cell. The priority of the neighboring cell is lower than the priority of the serving cell: If Srxlev of the serving cell is less than or equal to the threshold SnonIntraSearchP, and Squal of the serving cell is less than or equal to the threshold SnonIntraSearchQ, the terminal device starts inter-frequency measurement on the neighboring cell or inter-system measurement on the neighboring cell.

A condition for TN neighboring cell measurement is met. The condition for TN neighboring cell measurement may include one or more of the following: A priority of the TN neighboring cell is higher than the priority of the serving cell: The terminal device unconditionally starts TN neighboring cell measurement. The priority of the TN neighboring cell is equal to the priority of the serving cell: If the TN neighboring cell and the serving cell are intra-frequency cells, Srxlev of the serving cell is less than or equal to the threshold SIntraSearchP, and Squal of the serving cell is less than or equal to the threshold SIntraSearchQ, the terminal device starts intra-frequency measurement on the TN neighboring cell; and if the TN neighboring cell and the serving cell are inter-frequency cells, Srxlev of the serving cell is less than or equal to the threshold SnonIntraSearchP, and Squal of the serving cell is less than or equal to the threshold SnonIntraSearchQ, the terminal device starts inter-frequency measurement on the TN neighboring cell. The priority of the TN neighboring cell is lower than the priority of the serving cell: If Srxlev of the serving cell is less than or equal to the threshold SnonIntraSearchP, and Squal of the serving cell is less than or equal to the threshold SnonIntraSearchQ, the terminal device starts inter-frequency measurement on the TN neighboring cell or inter-system measurement on the neighboring cell.

TN neighboring cell measurement is being performed.

Signal quality of the TN neighboring cell of the serving cell is less than or equal to a second threshold. Optionally, the priority of the TN neighboring cell of the serving cell is higher than a priority of an NTN neighboring cell of the serving cell. The signal quality of the TN neighboring cell of the serving cell may be an RSRP of the TN neighboring cell of the serving cell, RSRQ of the TN neighboring cell of the serving cell, or a value determined based on an RSRP of the TN neighboring cell of the serving cell and RSRQ of the TN neighboring cell of the serving cell, for example, Srxlev of the TN neighboring cell of the serving cell and Squal of the TN neighboring cell of the serving cell.

Alternatively, the priority of the NTN neighboring cell of the serving cell is higher than the priority of the serving cell.

In a possible implementation, the first threshold may be equal to a third threshold, and the second threshold may be greater than or equal to the third threshold. The third threshold may be a threshold corresponding to the foregoing condition for TN neighboring cell measurement. For example, the first threshold may be equal to the threshold SnonIntraSearchP and the threshold SnonIntraSearchQ, or may be the threshold SIntraSearchP and the threshold SIntraSearchQ. For another example, the second threshold may be greater than or less than the threshold SIntraSearchP and the threshold SIntraSearchQ, or may be greater than or less than the threshold SnonIntraSearchP and the threshold SnonIntraSearchQ.

S402: The terminal device determines whether the first condition is met, and receives and/or reads the second system information when the first condition is met.

Reading the second system information may be understood as reading the ephemeris information in the second system information.

For example, the first condition includes that the signal quality of the serving cell is less than or equal to the first threshold, and the terminal device may receive and/or read the second system information when the signal quality of the serving cell is less than or equal to the first threshold. Otherwise, the terminal device does not need to receive and/or read the second system information.

Alternatively, if the first condition includes the condition for TN neighboring cell measurement or that TN neighboring cell measurement is being performed, the terminal device may receive and/or read the second system information when the condition for TN neighboring cell measurement is met or TN neighboring cell measurement is being performed. Otherwise, the terminal device does not need to receive and/or read the second system information. For example, the terminal device conditionally starts TN neighboring cell measurement only when the priority of the TN neighboring cell of the terminal device is higher than the priority of the serving cell. However, when the priority of the TN neighboring cell is lower than or equal to the priority of the serving cell, the terminal device does not unconditionally start TN neighboring cell measurement. Therefore, the terminal device may not immediately perform TN neighboring cell measurement after the priority of the TN neighboring cell is lower than or equal to the priority of the serving cell and the condition for TN neighboring cell measurement is met, but first receive and/or read the second system information. It may be understood that the terminal device receives and/or reads the second system information after the condition for TN neighboring cell measurement is met. Alternatively, the terminal device may perform TN neighboring cell measurement after the condition for TN neighboring cell measurement is met, and simultaneously receive and/or read the second system information.

Alternatively, the first condition includes that the signal quality of the TN neighboring cell of the serving cell is less than or equal to the second threshold. Optionally, when the priority of the TN neighboring cell of the serving cell is higher than the priority of the NTN neighboring cell of the serving cell, the terminal device may receive and/or read the second system information when the signal quality of the TN neighboring cell of the serving cell is less than or equal to the second threshold and the priority of the TN neighboring cell of the serving cell is higher than the priority of the NTN neighboring cell of the serving cell. Otherwise, the terminal device does not need to receive and/or read the second system information. It may be understood that, the terminal device may read the second system information when neighboring cell measurement is already performed on all TN neighboring cells whose priorities are higher than that of the NTN neighboring cell and signal quality obtained through measurement is less than or equal to the second threshold. Alternatively, it may be understood that the terminal device receives and/or reads the second system information when determining that NTN neighboring cell measurement needs to be performed. Alternatively, the terminal device may receive and/or read the second system information when the priority of the NTN neighboring cell of the serving cell is higher than the priority of the serving cell.

Alternatively, if the first condition includes the condition for neighboring cell measurement, the terminal device may receive and/or read the second system information when the condition for neighboring cell measurement is met. Otherwise, the terminal device does not need to receive and/or read the second system information.

Based on the foregoing solution, the terminal device may read the ephemeris information only when the signal quality of the serving cell is less than or equal to the first threshold, the condition for TN neighboring cell measurement is met, the condition for neighboring cell measurement is met, TN neighboring cell measurement is being performed, or the signal quality of the TN neighboring cell of the serving cell is less than or equal to the second threshold, or the priority of the NTN neighboring cell of the serving cell is higher than the priority of the serving cell, thereby reducing ineffective reading of the ephemeris information, and reducing measurement power consumption of the terminal device.

In a possible implementation, the first system information may include the first condition and the second condition (also referred to as an enhanced condition for NTN neighboring cell measurement), or the first system information may not include the first condition but include only the second condition.

The second condition may include that the signal quality of the TN neighboring cell of the serving cell is less than or equal to the second threshold. Optionally, the priority of the TN neighboring cell of the serving cell is higher than the priority of the NTN neighboring cell of the serving cell.

The unenhanced condition for NTN neighboring cell measurement is the same as the condition for TN neighboring cell measurement. For example, the unenhanced condition for NTN neighboring cell measurement may include one or more of the following: A priority of the NTN neighboring cell is higher than a priority of the serving cell: The terminal device unconditionally starts NTN neighboring cell measurement. The priority of the NTN neighboring cell is equal to the priority of the serving cell: If the NTN neighboring cell and the serving cell are intra-frequency cells, Srxlev of the serving cell is less than or equal to a threshold SIntraSearchP, and Squal of the serving cell is less than or equal to a threshold SIntraSearchQ, the terminal device starts intra-frequency measurement on the NTN neighboring cell; and if the NTN neighboring cell and the serving cell are inter-frequency cells, Srxlev of the serving cell is less than or equal to a threshold SnonIntraSearchP, and Squal of the serving cell is less than or equal to a threshold SnonIntraSearchQ, the terminal device starts inter-frequency measurement on the NTN neighboring cell. The priority of the NTN neighboring cell is lower than the priority of the serving cell: If Srxlev of the serving cell is less than or equal to the threshold SnonIntraSearchP, and Squal of the serving cell is less than or equal to the threshold SnonIntraSearchQ, the terminal device starts inter-frequency measurement on the NTN neighboring cell or inter-system measurement on the neighboring cell.

The terminal device may perform NTN neighboring cell measurement when the second condition is met. It may be understood that, the terminal device may perform NTN neighboring cell measurement when neighboring cell measurement is already performed on all TN neighboring cells whose priorities are higher than that of the NTN neighboring cell and signal quality obtained through measurement is less than or equal to the second threshold. Optionally, the terminal device may perform NTN neighboring cell measurement when the foregoing unenhanced condition for NTN neighboring cell measurement is met.

For example, the priority of the TN neighboring cell is higher than the priority of the serving cell:
The terminal device unconditionally starts TN neighboring cell measurement, to obtain Srxlev of the TN neighboring cell and Squal of the TN neighboring cell. If Srxlev of the TN neighboring cell is less than or equal to the threshold SIntraSearchP, and Squal of the TN neighboring cell is less than or equal to the threshold SIntraSearchQ, or if Srxlev of the TN neighboring cell is less than or equal to the threshold SnonIntraSearchP, and Squal of the TN neighboring cell is less than or equal to the threshold SnonIntraSearchQ, the terminal device performs NTN neighboring cell measurement.

The priority of the TN neighboring cell is equal to the priority of the serving cell:
If the TN neighboring cell and the serving cell are intra-frequency cells, Srxlev of the serving cell is less than or equal to the threshold SIntraSearchP, and Squal of the serving cell is less than or equal to the threshold SIntraSearchQ, the terminal device starts intra-frequency measurement on the TN neighboring cell, to obtain Srxlev of the TN neighboring cell and Squal of the TN neighboring cell. If Srxlev of the TN neighboring cell is less than or equal to the threshold SIntraSearchP, and Squal of the TN neighboring cell is less than or equal to the threshold SIntraSearchQ, the terminal device performs NTN neighboring cell measurement.

If the TN neighboring cell and the serving cell are inter-frequency cells, Srxlev of the serving cell is less than or equal to the threshold SnonIntraSearchP, and Squal of the serving cell is less than or equal to the threshold SnonIntraSearchQ, the terminal device starts inter-frequency measurement on the TN neighboring cell, to obtain Srxlev of the TN neighboring cell and Squal of the TN neighboring cell. If Srxlev of the TN neighboring cell is less than or equal to the threshold SnonIntraSearchP, and Squal of the TN neighboring cell is less than or equal to the threshold SnonIntraSearchQ, the terminal device performs NTN neighboring cell measurement.

The priority of the TN neighboring cell is lower than the priority of the serving cell:
If Srxlev of the serving cell is less than or equal to the threshold SnonIntraSearchP, and Squal of the serving cell is less than or equal to the threshold SnonIntraSearchQ, the terminal device starts inter-frequency measurement on the TN neighboring cell or inter-system measurement on the neighboring cell, to obtain Srxlev of the TN neighboring cell and Squal of the TN neighboring cell. If Srxlev of the TN neighboring cell is less than or equal to the threshold SnonIntraSearchP, and Squal of the TN neighboring cell is less than or equal to the threshold SnonIntraSearchQ, the terminal device performs NTN neighboring cell measurement.

In a possible implementation, when the first condition is not met and the second condition is met, the terminal device may receive and/or read the second system information before the NTN neighboring cell measurement is performed. Otherwise, the terminal device does not need to receive and/or read the second system information.

In a possible implementation, the terminal device may receive and/or read the second system information when the first condition is not met and the first system information further includes first indication information. Otherwise, the terminal device does not need to receive and/or read the second system information. The first indication information indicates that the second system information includes the ephemeris information.

For example, when the terminal device changes from RRC_IDLE or RRC_INACTVE to RRC_CONNECTED, the terminal device may perform the following operations:
If a SIB3 carries neighCellMeasCriteria, the terminal device sets NRSRPRef to a latest serving cell measurement result. The serving cell measurement result may be used for cell selection or reselection.

Alternatively, if the system information SIB3 carries neighCellMeasCriteria and does not meet a relaxed measurement condition, the terminal device starts a timer T326, and sets a length of the timer T326 to t-MeasureDeltaP.

When the terminal device is in an RRC_CONNECTED state, the terminal device may perform the following operations:
If the SIB3 carries neighCellMeasCriteria, and a difference between NRSRPRef and a first difference is greater than s-MeasureDeltaP, the terminal device may set NRSRPRef to the first difference, where the first difference is a difference between the NRSRP and nrs-PowerOffsetNonAnchor, or the terminal device may start or restart the timer T326, and set a length of the timer T326 to t-MeasureDeltaP.

Alternatively, if the SIB3 does not carry neighCellMeasCriteria or if the timer T326 is running, the terminal device may perform intra-frequency measurement on the neighboring cell when the first difference is less than a threshold s-MeasureIntra, and perform inter-frequency measurement on the TN neighboring cell when the first difference is less than a threshold s-MeasureInter.

Further, if the signal quality of the TN neighboring cell of the serving cell is less than or equal to the second threshold, the terminal device may perform NTN neighboring cell measurement. Optionally, the priority of the TN neighboring cell of the serving cell is higher than the priority of the NTN neighboring cell of the serving cell. It may be understood that, the terminal device may perform NTN neighboring cell measurement when an enhanced condition for NTN neighboring cell measurement is met. The enhanced condition for NTN neighboring cell measurement includes that the signal quality of the TN neighboring cell of the serving cell is less than or equal to the second threshold. Optionally, the priority of the TN neighboring cell of the serving cell is higher than the priority of the NTN neighboring cell of the serving cell.

Optionally, the terminal device may receive and/or read the second system information when one or more of the following are met: the signal quality of the serving cell is less than or equal to the first threshold; the condition for neighboring cell measurement is met; the condition for TN neighboring cell measurement is met; TN neighboring cell measurement is being performed; the condition for NTN neighboring cell measurement is met; or NTN neighboring cell measurement is performed. Otherwise, the terminal device does not need to receive and/or read the second system information. In this way, the terminal device may perform NTN neighboring cell measurement based on the ephemeris information read from the second system information. The condition for NTN neighboring cell measurement may be the foregoing enhanced condition for NTN neighboring cell measurement, or may be the foregoing unenhanced condition for NTN neighboring cell measurement.

Alternatively, if the SIB3 carries a service stop time of the serving cell, the terminal device may perform intra-frequency measurement on the neighboring cell or inter-frequency measurement on the neighboring cell before the service stop time expires. A specific time for performing neighboring cell measurement is implemented by the terminal device. Alternatively, when the SIB3 carries t-ServiceStartNeigh, the terminal device may perform intra-frequency measurement on the neighboring cell or inter-frequency measurement on the neighboring cell when or after t-ServiceStartNeigh arrives. A specific time for performing neighboring cell measurement is implemented by the terminal device.

Alternatively, if the SIB3 carries a reference location and a distance threshold of the serving cell, the terminal device may perform neighboring cell measurement when a distance between the terminal device and the reference location of the serving cell is less than the distance threshold.

Based on the foregoing solution, the terminal device may perform neighboring cell measurement on the NTN cell only when the signal quality of the TN neighboring cell of the serving cell is less than or equal to the second threshold, thereby reducing ineffective measurement of the NTN neighboring cell, and reducing measurement power consumption of the terminal device.

To resolve the foregoing problem that the ephemeris information of the neighboring cell may not be obtained because the terminal device stops the timer T318 because the terminal device obtains the ephemeris information of the serving cell, embodiments of this application provide a solution in Embodiment 2. Embodiment 2 may be implemented with reference to Embodiment 1. The following provides specific descriptions.

### Embodiment 2

In Embodiment 2, a terminal device may delay stopping a timer T318. Specifically, if a timer T317 expires, the terminal device may start the timer T318, and obtain a SIB31. Further, if ephemeris information of a neighboring cell expires, the terminal device may obtain a new SIB that carries the ephemeris information of the neighboring cell. The terminal device may stop the timer T318 when successfully obtaining the SIB31 and the new SIB that carries the ephemeris information of the neighboring cell. Optionally, the timer T317 may correspond to ephemeris information of a serving cell (that is, the timer T317 expires and the ephemeris information of the serving cell expires), or the timer T317 may correspond to the ephemeris information of the neighboring cell (that is, the timer T317 expires and the ephemeris information of the neighboring cell expires). When the timer T318 stops or expires, the terminal device no longer reads the SIB31 and the new SIB that carries the ephemeris information of the neighboring cell.

Alternatively, the terminal device may define a new timer T318x. The timer T318x may correspond to a time for obtaining the ephemeris information of the neighboring cell, and the timer T318 may correspond to a time for obtaining the ephemeris information of the serving cell. The terminal device may continue to read the ephemeris information of the neighboring cell when the timer T318 stops or expires, and stop the timer T318x when the ephemeris information of the neighboring cell is successfully obtained.

Specifically, if the timer T317 expires, the terminal device may start the timer T318, and obtain the SIB31. Further, if the ephemeris information of the neighboring cell expires, the terminal device may obtain a new SIB that carries the ephemeris information of the neighboring cell. The terminal device may stop the timer T318 when successfully obtaining the SIB31. If the ephemeris information of the neighboring cell expires or the terminal device has not obtained a new SIB carrying the ephemeris information of the neighboring cell, the terminal device may start the timer T318x, and then the terminal device may stop the timer T318x when successfully obtaining the ephemeris information of the neighboring cell. Optionally, the timer T317 may correspond to ephemeris information of a serving cell (that is, the timer T317 expires and the ephemeris information of the serving cell expires), or the timer T317 may correspond to the ephemeris information of the neighboring cell (that is, the timer T317 expires and the ephemeris information of the neighboring cell expires). When the timer T318 stops or expires, for an NB-IoT terminal device that has not activated access-side security and does not support transmission optimization that is performed through a control plane, the terminal device enters RRC_IDLE; otherwise, the terminal device initiates RRC reestablishment. When the timer T318x stops or expires, the terminal device no longer reads the new SIB that carries the ephemeris information of the neighboring cell.

Alternatively, the terminal device may define a new timer T318y. The timer T318y may correspond to a time for obtaining the ephemeris information of the neighboring cell, and the timer T318 may correspond to a time for obtaining the ephemeris information of the serving cell. The terminal device may stop the timer T318y when successfully obtaining the ephemeris information of the neighboring cell.

Specifically, if the timer T317 expires, the terminal device may start the timer T318, and obtain the SIB31. Further, if the ephemeris information of the neighboring cell expires, the terminal device may start the timer T318y, and obtain a new SIB that carries the ephemeris information of the neighboring cell. The terminal device may stop the timer T318 when successfully obtaining the SIB31. In this case, although the terminal device stops obtaining the SIB31, the terminal device may continue to obtain the ephemeris information of the neighboring cell. The terminal device may stop the timer T318y when successfully obtaining the ephemeris information of the neighboring cell. In this case, although the terminal device stops obtaining the new SIB that carries the ephemeris information of the neighboring cell, the terminal device may continue to obtain the SIB31. Optionally, the timer T317 may correspond to ephemeris information of a serving cell (that is, the timer T317 expires and the ephemeris information of the serving cell expires), or the timer T317 may correspond to the ephemeris information of the neighboring cell (that is, the timer T317 expires and the ephemeris information of the neighboring cell expires). When the timer T318 stops or expires, for an NB-IoT terminal device that has not activated access-side security and does not support transmission optimization that is performed through a control plane, the terminal device enters RRC_IDLE; otherwise, the terminal device initiates RRC reestablishment. When the timer T318y stops or expires, the terminal device may no longer read the new SIB that carries the ephemeris information of the neighboring cell.

Based on the foregoing solution, the terminal device may delay stopping the timer T318 or define a new timer to control reading of the ephemeris information of the neighboring cell, to ensure that the terminal device successfully obtains the ephemeris information of the neighboring cell.

In this embodiment of this application, the network device or the terminal device may perform some or all of the steps in this embodiment of this application. The steps or operations are merely examples. In this embodiment of this application, other steps or variations of various steps may be further performed. In addition, the steps may be performed in a sequence different from a sequence presented in embodiments of this application, and not all operations in embodiments of this application need to be performed.

To implement functions in the foregoing embodiments, the network device or the terminal device includes a corresponding hardware structure and/or software module for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

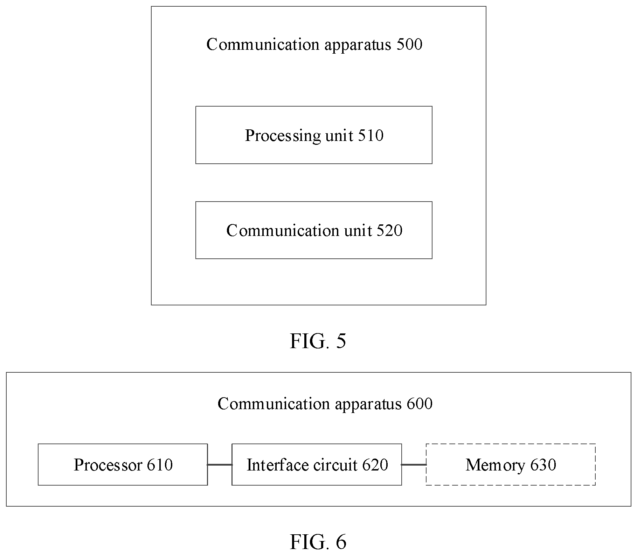

FIG. 5 and FIG. 6 are diagrams of structures of possible communication apparatuses according to embodiments of this application. The communication apparatus may be configured to implement functions of the network device or the terminal device in the foregoing method embodiments, and therefore can also implement beneficial effects of the foregoing method embodiments. In embodiments of this application, the communication apparatus may be a network device or a terminal device, or may be a module (for example, a chip) used in the network device or the terminal device.

The communication apparatus 500 shown in FIG. 5 includes a processing unit 510 and a communication unit 520. The communication apparatus 500 is configured to implement functions of the network device or the terminal device in the foregoing method embodiments.

When the communication apparatus 500 is configured to implement the functions of the terminal device in the foregoing method embodiments:
the communication unit is configured to receive first system information from the network device, where the first system information includes a first condition, the first condition is used by the terminal device to determine whether to receive and/or read second system information, and the second system information includes ephemeris information configured by the network device; and
the processing unit is configured to determine whether the first condition is met, and receive and/or read the second system information when the first condition is met.

When the communication apparatus 500 is configured to implement the functions of the network device in the foregoing method embodiments:
the communication unit is configured to broadcast first system information and second system information, where the first system information includes a first condition, the first condition is used by the terminal device to determine whether to receive and/or read the second system information, and the second system information includes ephemeris information configured by the network device.

For more detailed descriptions of the processing unit 510 and the communication unit 520, directly refer to the related descriptions in the foregoing method embodiment. Details are not described herein again.

A communication apparatus 600 shown in FIG. 6 includes a processor 610 and an interface circuit 620. The processor 610 and the interface circuit 620 are coupled to each other. The interface circuit 620 may be a transceiver or an input/output interface. For example, the communication apparatus 600 may further include a memory 630, configured to: store instructions executed by the processor 610, store input data required by the processor 610 to run instructions, or store data generated after the processor 610 runs instructions.

When the communication apparatus 600 is configured to implement the foregoing method embodiment, the processor 610 is configured to implement a function of the processing unit 510, and the interface circuit 620 is configured to implement a function of the communication unit 520.

When the communication apparatus is a chip used in a terminal device, the chip in the terminal device implements a function of the terminal device in the foregoing method embodiments. The chip in the terminal device receives information from another module (for example, a radio frequency module or an antenna) in the terminal device, where the information is sent by a network device to the terminal device; or the chip in the terminal device sends information to another module (for example, a radio frequency module or an antenna) in the terminal device, where the information is sent by the terminal device to a network device.

When the communication apparatus is a module used in a network device, the module in the network device implements the function of the network device in the foregoing method embodiment. The module in the network device receives information from another module (for example, a radio frequency module or an antenna) in the network device, where the information is sent by a terminal device to the network device. Alternatively, the module in the network device sends information to another module (for example, a radio frequency module or an antenna) in the network device, where the information is sent by the network device to a terminal device. The module in the network device herein may be a chip of the network device, or may be a DU or another module. The DU herein may be a DU in an open radio access network (open radio access network, O-RAN) architecture.

The processor in embodiments of this application may be a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, a transistor logic device, a hardware component, or any combination thereof. The general purpose processor may be a microprocessor or any regular processor or the like.

The method steps in embodiments of this application may be implemented in a hardware manner, or may be implemented in a manner of executing software instructions by the processor. The software instruction may include corresponding software modules. The software modules may be stored in a random access memory, a flash memory, a read-only memory, a programmable read-only memory, an erasable programmable read-only memory, an electrically erasable programmable read-only memory, a register, a hard disk, a removable hard disk, and a compact optical disk read-only memory (compact disc read-only memory, CD-ROM) or any other form of storage medium well known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed operating process of the foregoing described system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not executed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

When the functions are implemented in the form of a software functional unit and sold or used as an independent product, the functions may be stored in a computer-readable storage medium. Based on this understanding, a part that essentially contributes to the technical solutions of this application or a part of the technical solutions may be embodied in a form of a software product. The computer software product is stored in a storage medium, and includes several instructions for enabling a computer device (which may be a personal computer, a server, a network device, or the like) to perform all or some steps of the methods in embodiments of this application. The foregoing storage medium includes any medium, for example, a USB flash drive, a removable hard disk, a read-only memory (read-only memory, ROM), a RAM, a magnetic disk, or an optical disc, that can store program code.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, performed by a terminal device or a chip used in the terminal device, wherein the method comprises:
receiving first system information from a network device, wherein the first system information comprises a first condition, the first condition is used by the terminal device to determine whether to receive and/or read second system information, and the second system information comprises ephemeris information configured by the network device;
determining whether the first condition is met; and
receiving and/or reading the second system information when the first condition is met.

2. The method according to claim 1, wherein the first condition comprises one or more of the following:
signal quality of a serving cell of the terminal device is less than or equal to a first threshold;
a condition for terrestrial network TN neighboring cell measurement is met;
TN neighboring cell measurement is being performed;
signal quality of a TN neighboring cell of a serving cell of the terminal device is less than or equal to a second threshold; or
a priority of a non-terrestrial network NTN neighboring cell of a serving cell of the terminal device is higher than a priority of the serving cell.

3. The method according to claim 2, wherein if the signal quality of the TN neighboring cell of the serving cell of the terminal device is less than or equal to the second threshold, a priority of the TN neighboring cell is higher than the priority of the NTN neighboring cell of the serving cell.

4. The method according to any one of claims 1 to 3, wherein the first system information further comprises a second condition, and the method further comprises:
performing NTN neighboring cell measurement when the second condition is met, wherein the second condition comprises: the signal quality of the TN neighboring cell of the serving cell of the terminal device is less than or equal to the second threshold.

5. The method according to claim 4, wherein the priority of the TN neighboring cell is higher than the priority of the NTN neighboring cell of the serving cell.

6. The method according to claim 4 or 5, wherein the method further comprises:
when the first condition is not met and the second condition is met, receiving and/or reading the second system information before the NTN neighboring cell measurement is performed.

7. The method according to claim 4 or 5, wherein the method further comprises:
when the first condition is not met and the first system information further comprises first indication information, receiving and/or reading the second system information, wherein the first indication information indicates that the second system information comprises the ephemeris information.

8. The method according to claim 2, wherein the first threshold is equal to a third threshold, and the third threshold is a threshold corresponding to the condition for TN neighboring cell measurement.

9. The method according to any one of claims 2 to 4, wherein the second threshold is greater than or equal to a third threshold, and the third threshold is a threshold corresponding to the condition for TN neighboring cell measurement.

10. A communication method, performed by a network device or a chip used in the network device, wherein the method comprises:
broadcasting first system information and second system information, wherein the first system information comprises a first condition, the first condition is used by a terminal device to determine whether to receive and/or read the second system information, and the second system information comprises ephemeris information configured by the network device.

11. The method according to claim 10, wherein the first condition comprises one or more of the following:
signal quality of a serving cell of the terminal device is less than or equal to a first threshold;
a condition for TN neighboring cell measurement is met;
TN neighboring cell measurement is being performed;
signal quality of a TN neighboring cell of a serving cell of the terminal device is less than or equal to a second threshold; or
a priority of an NTN neighboring cell of a serving cell of the terminal device is higher than a priority of the serving cell.

12. The method according to claim 11, wherein if the signal quality of the TN neighboring cell of the serving cell of the terminal device is less than or equal to the second threshold, a priority of the TN neighboring cell is higher than the priority of the NTN neighboring cell of the serving cell.

13. The method according to any one of claims 10 to 11, wherein the first system information further comprises a second condition, the second condition is used by the terminal device to perform NTN neighboring cell measurement, and the second condition comprises: the signal quality of the TN neighboring cell of the serving cell of the terminal device is less than or equal to the second threshold.

14. The method according to claim 13, wherein a priority of the TN neighboring cell is higher than the priority of the NTN neighboring cell of the serving cell.

15. The method according to claim 11, wherein the first threshold is equal to a third threshold, and the third threshold is a threshold corresponding to the condition for TN neighboring cell measurement.

16. The method according to any one of claims 11 to 13, wherein the second threshold is greater than or equal to a third threshold, and the third threshold is a threshold corresponding to the condition for TN neighboring cell measurement.

17. A communication apparatus, comprising a module configured to perform the method according to any one of claims 1 to 9, or a module configured to perform the method according to any one of claims 10 to 16.

18. A communication apparatus, comprising a processor and an interface circuit, wherein the interface circuit is configured to receive a signal from another communication apparatus different from the communication apparatus and transmit the signal to the processor, or send, to another communication apparatus different from the communication apparatus, a signal from the processor, and the processor implements the method according to any one of claims 1 to 9 or the method according to any one of claims 10 to 16 through a logic circuit or by executing code instructions.

19. A communication apparatus, comprising:
a memory, configured to store a computer program; and
a processor, configured to invoke the computer program from the memory, and run the computer program, to implement the method according to any one of claims 1 to 9 or the method according to any one of claims 10 to 16.

20. A chip system, comprising:
a memory, configured to store a computer program; and
a processor, configured to invoke the computer program from the memory, and run the computer program, so that a device on which the chip system is installed performs the method according to any one of claims 1 to 9 or the method according to any one of claims 10 to 16.

21. A computer program product, comprising a computer program, wherein when the computer program is executed by a communication apparatus, the method according to any one of claims 1 to 16 is implemented.

22. A computer-readable storage medium, wherein the storage medium stores a computer program or instructions, and when the computer program or the instructions are executed by a communication apparatus, the method according to any one of claims 1 to 16 is implemented.

23. A communication system, comprising:
a terminal device, configured to perform the method according to any one of claims 1 to 9; and
a network device, configured to perform the method according to any one of claims 10 to 16.
